# EUROPEAN PATENT APPLICATION

(11) **EP 4 357 969 A1**
(43) Date of publication of application: **24.04.2024**
(21) Application number: 22202140.4
(22) Date of filing: 18.10.2022
(51) Int. Cl.: G06K 19/077, G06K 7/10, H01P 1/165, H01Q 3/00, H01Q 13/02, H04B 7/00, H01Q 21/24

(54) **A SYSTEM FOR READING A PASSIVE RADIO FREQUENCY DEVICE AND A PASSIVE RADIO FREQUENCY DEVICE**

(71) Applicant: Nokia Technologies Oy, 02610 Espoo (FI)
(72) Inventor: SVENDSEN, Simon, Aalborg (DK); VEJLGAARD, Benny, Gistrup (DK); HARREBEK, Johannes, Aalborg (DK); BARBU, Oana-Elena, Aalborg (DK)
(74) Representative: Nokia EPO representatives

(57) **Abstract**

A passive radio frequency device configured to backscatter a received radio frequency signal having a first polarization as a modulated radio frequency signal having a second polarization different to the first polarization. A system comprising: at least a passive radio frequency device configured to backscatter a received radio frequency signal having a first polarization as a modulated radio frequency signal having a second polarization different to the first polarization, an activator configured to transmit the radio frequency signal having the first polarization; a reader configured to the receive the radio frequency signal having the second polarization more efficiently than the radio frequency signal having the first polarization.

## Description

A system for reading a passive radio frequency device and a passive radio frequency device.

### TECHNOLOGICAL FIELD

Examples of the disclosure relate to a system for reading a passive radio frequency device and a passive radio frequency device. Some relate to implementation in cellular telecommunication networks.

### BACKGROUND

A system for reading a passive radio frequency device typically comprises an apparatus that activates a passive radio frequency device 30 by transfer of electromagnetic energy and also reads a response from the passive radio frequency device.

One example of a passive radio frequency device is an ambient power-enabled Internet of Things (Ambient power-enabled loT) device. This type of device is either battery-less or with limited energy storage capability (i.e., using a capacitor) and the energy is provided through the harvesting of radio waves, light, motion, heat, or any other power source that could be seen suitable.

### BRIEF SUMMARY

According to various, but not necessarily all, examples there is provided a passive radio frequency device configured to backscatter a received radio frequency signal having a first polarization as a modulated radio frequency signal having a second polarization different to the first polarization.

In some but not necessarily all examples, the passive radio frequency device comprises polarization conversion circuitry configured to convert a signal between linear polarization and circular polarization.

In some but not necessarily all examples, the polarization conversion circuitry is configured to convert a signal from linear polarization to circular polarization.

In some but not necessarily all examples, the polarization conversion circuitry is configured to convert a signal from circular polarization to linear polarization.

In some but not necessarily all examples, the passive radio frequency device comprises polarization conversion circuitry configured to convert a signal between left-handed circular polarization and right-handed circular polarization.

According to various, but not necessarily all, examples there is provided a passive radio frequency device as claimed in any preceding claim, comprising polarization conversion circuitry comprising:
a first path associated with a first linear polarization;
a second path associated with a second linear polarization orthogonal to the first linear polarization;
means for introducing a differential delay between the first path and the second path.

In some but not necessarily all examples, the second path but not the first path comprises a delay element.

In some but not necessarily all examples, the delay element corresponds to π/2 radians at a frequency of the received radio frequency signal.

In some but not necessarily all examples, the first path comprises a balun and the second path comprises a balun.

In some but not necessarily all examples, the passive radio frequency device comprises a dual polarized antenna or receiving the radio frequency signal having the first polarization and transmitting the radio frequency signal having the second polarization.

In some but not necessarily all examples, the passive radio frequency device is configured as a battery-less tag.

According to various, but not necessarily all, examples there is provided a system comprising:
at least the passive radio frequency device,
an activator configured to transmit the radio frequency signal having the first polarization;
a reader configured to receive the radio frequency signal having the second polarization more efficiently than the radio frequency signal having the first polarization.

In some but not necessarily all examples, the activator is comprised in a first node of a cellular telecommunications network, wherein the reader is comprised in a second node of the cellular telecommunications network that is distinct from the first node of the cellular telecommunications network.

In some but not necessarily all examples, the first node is a user equipment and/or the second node is a user equipment.

In some but not necessarily all examples, the activator and the reader are configured for line-of-sight operation,
wherein the reader is configured to reject radio frequency signals having the first polarization and accept radio frequency signals having the second polarization, wherein the reader is configured to reject radio frequency signals from the activator and accept radio frequency signals from the passive radio frequency device.

In some but not necessarily all examples, the activator comprises a dual-polarized patch antenna and/or wherein the reader comprises means for switching between rejecting/accepting left-hand circular polarized signals and right-hand circular polarized signals.

According to various, but not necessarily all, examples there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### TERMINOLOGY

The terms 'CoPol' and 'CrossPol' are used to refer to two mutually orthogonal linear polarizations. The terms first linear polarization and second linear polarization can be used instead with the understanding that the first linear polarization and the second linear polarization are orthogonal. The use of the terms 'CoPol' and 'CrossPol' therefor implies linear polarization and orthogonality. However, it does not necessarily imply any defined reference polarization direction (for example, an antenna under test polarization) that is aligned with CoPol and orthogonal to CrossPol.

The terms CoPol and CrossPol are, for example, used to refer to two orthogonal feeds of an antenna, as the feeds are always orthogonal, independent of the orientation of the device.

The activator 10 for a passive radio frequency device 30 will in some circumstances be referred to as a passive radio frequency device activator 10 or activator 10. The reader 20 for the (activated) passive radio frequency device 30 will in some circumstances be referred to as a passive radio frequency device reader 20 or reader 20. The activator 10 is also known as an illuminator. It is the passive radio frequency device 30 that is passive, not the activator 10 or the reader 20.

### BRIEF DESCRIPTION

Some examples will now be described with reference to the accompanying drawings in which:
FIG. 1 shows an example of the subject matter described herein;
FIG. 2 shows another example of the subject matter described herein;
FIG. 3 shows another example of the subject matter described herein;
FIG. 4 shows another example of the subject matter described herein;
FIG. 5 shows another example of the subject matter described herein;
FIG. 6A shows another example of the subject matter described herein;
FIG. 6B shows another example of the subject matter described herein;
FIG. 7 shows another example of the subject matter described herein;
FIG. 8 shows another example of the subject matter described herein;
FIG. 9 shows another example of the subject matter described herein.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

### DETAILED DESCRIPTION

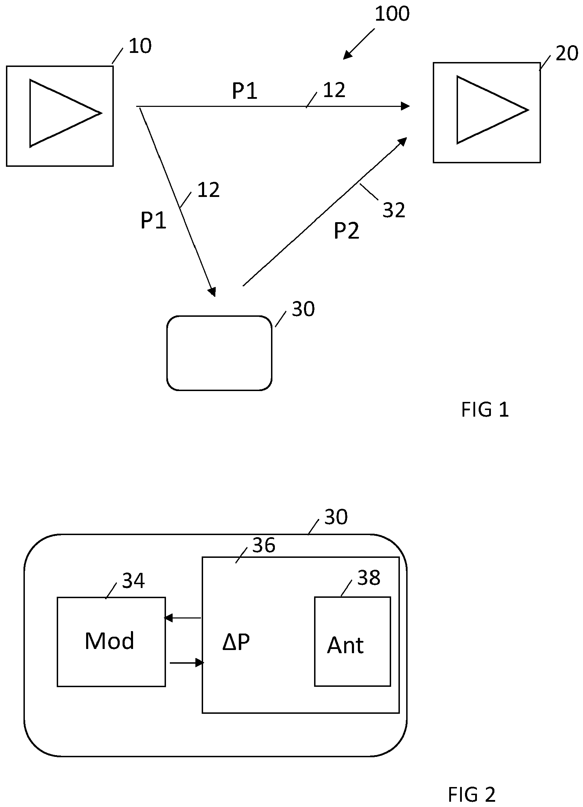

Fig 1 illustrates a system 100 comprising: an activator 10, a reader 20 and one or more passive radio frequency devices 30. The activator 10 activates a passive radio frequency device 30 by transmitting a radio frequency signal 12. The passive radio frequency device 30 responds with a radio frequency signal 32 which is received by the reader 20.

The activator 10 is also known as an illuminator.

The activator 10 is configured to transmit a radio frequency signal 12 having the first polarization P1. This is used to activate a passive radio frequency device 30.

The passive radio frequency device 30 is configured to backscatter a received radio frequency signal 12 having the first polarization P1, transmitted by the activator 10, as a modulated radio frequency signal 32 having a second polarization P2 different to the first polarization P1.

The reader 20 is configured to receive the radio frequency signal 32 having a second polarization P2 more efficiently than the radio frequency signal 12 having the first polarization P1. The reader 20 therefore receives the radio frequency signal 32 having a second polarization P2 from the passive radio frequency device 30 more efficiently than the radio frequency signal 12 having the first polarization P1 from the activator 10.

The activator 10 and the reader 20 are physically separated and in different apparatus. The radio frequency signal 12 is a propagating radio signal as is the radio frequency signal 32.

The reader 20 is configured to reject radio frequency signals 12 having the first polarization P1 and accept radio frequency signals 32 having the second polarization P2. The reader 20 is thus configured to reject radio frequency signals 12 transmitted from the activator 10 and accept radio frequency signals 32 transmitted from the passive radio frequency device 30.

In some examples, the activator 10 and the reader 20 are separated at a distance exceeding 100m or 200m.

In some examples, the activator 10 and the reader 20 are manually configured and aligned for line-of-sight operation. The activator 10 and the reader 20 are configured for line-of-sight operation in FIG 1.

In some examples, the activator 10 and the reader 20 are static or static between readings.

FIG 2 illustrates an example of a passive radio frequency device 30 configured to backscatter a received radio frequency signal 12 having a first polarization P1 as a modulated radio frequency signal 32 having a second polarization P2 different to the first polarization P1.

The passive radio frequency device 30 comprises polarization conversion circuitry 36 configured to convert a signal between the first polarization P1 (as received at antenna 38) and the second polarization P2 (as transmitted, for example reflected, by antenna 38).

The passive radio frequency device 30 comprises modulation circuitry 34 configured to modulate a signal received at antenna 38 before retransmission by antenna 38.

The antenna 38 is a dual polarized antenna for receiving the radio frequency signal 12 having the first polarization P1 and transmitting the radio frequency signal 32 having the second polarization P2.

In this example, the passive radio frequency device 30 is configured as a battery-less tag. The energy it requires for operation is harvested, for example from the environment or from the received signal 12.

In some examples, the passive radio frequency device is an ambient power-enabled Internet of Things (Ambient power-enabled loT) device.

In some examples, the first polarization P1 and the second polarization P2 are different polarization. For example, one could be linear polarized while the other is circularly polarized. In some examples, the first polarization P1 and the second polarization P2 are orthogonal. For example, one could be linear polarized in a first direction while the other is linear polarized in an orthogonal direction. For example, one could be left-hand circularly polarized while the other is right-hand circularly polarized.

In one example, the first polarization P1 is linear polarized and the second polarization P2 is circularly polarized.

In another example, the first polarization P1 is circularly polarized and the second polarization P2 is linear polarized.

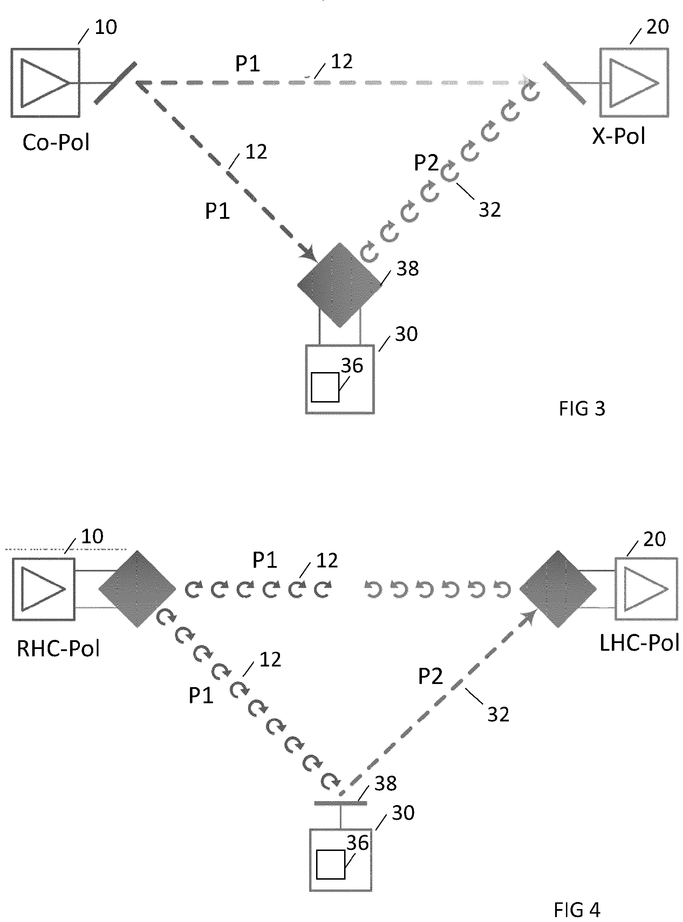

FIGs 3 & 4 illustrate an example where the polarization conversion circuitry 36 is configured to convert an activation signal 12 between linear polarization and circular polarization before transmission of the circular polarized signal 32.

In FIG 3 the polarization conversion circuitry 36 is configured to convert an activation signal 12 from linear polarization to circular polarization. The passive radio frequency device 30 receives a linear polarized activation signal 12 and transmits a circular polarized signal 32.

FIG 4 illustrates an example where the polarization conversion circuitry 36 is configured to convert an activation signal 12 from circular polarization to linear polarization. The passive radio frequency device 30 receives a circular polarized activation signal 12 and transmits a linear polarized signal 32.

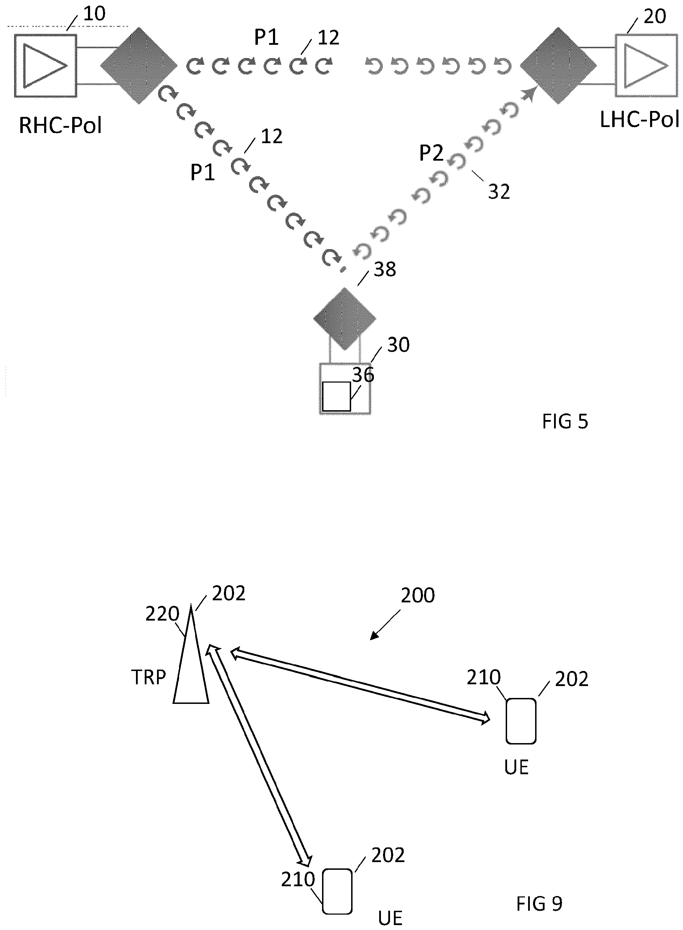

FIG 5 illustrates an example where polarization conversion circuitry 36 is configured to convert an activation signal 12 between left-handed circular polarization and right-handed circular polarization. The passive radio frequency device 30 receives a left-handed circular polarized activation signal 12 and transmits a right-handed circular polarized signal 32.

In at least some examples, the activator 10 is configured to perform as illustrated in FIG 3 and/or as illustrated in FIG 4 and/or as illustrated in FIG 5. That is the activator 10 can be configured to change the first polarization P1 of the transmitted signal 12.

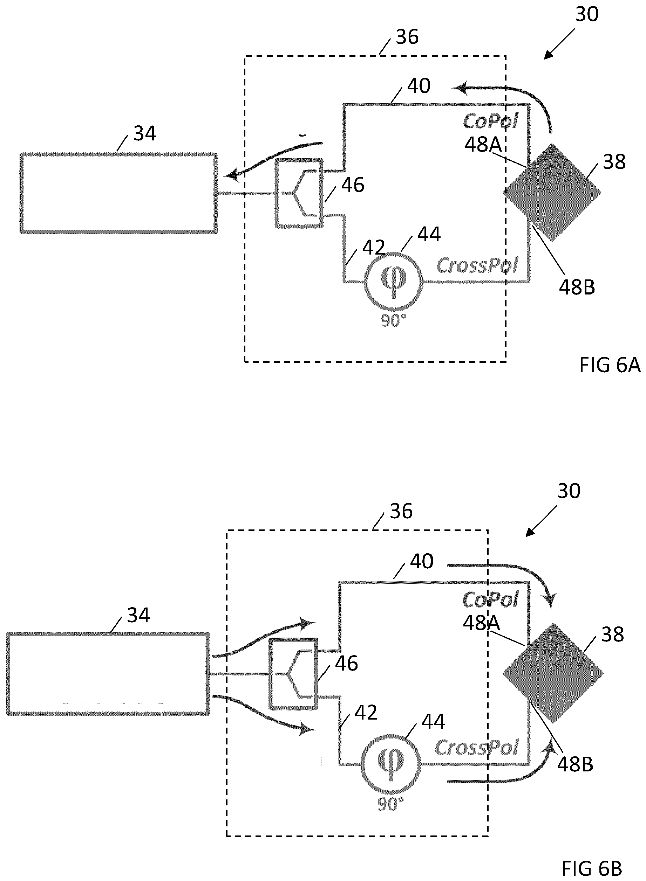

FIGs 6A and 6B illustrate an example of polarization conversion circuitry 36 that can be used in any of the examples illustrated in FIGs 3, 4 or 5.

The antenna 38 is coupled to the modulation circuitry 34 via two distinct paths 40, 42 within the polarization conversion circuitry 36. A first feed 48A of the antenna 38 associated with a first linear polarization (CoPol) is coupled via a first path 40 and a combiner/splitter 46 to the modulation circuitry 34. A second feed 48B of the antenna 38 associated with a second linear polarization (CrossPol), orthogonal to the first linear polarization (CoPol), is coupled via a second path 42 and the combiner/splitter 46 to the modulation circuitry 34.

The first path 40 is associated with the first linear polarization (CoPol) and the second path 42 is associated with the second linear polarization (CrossPol) orthogonal to the first linear polarization (CoPol).

The polarization conversion circuitry 36also comprises means 44 for introducing a differential delay between the first path 40 and the second path 42.

In this example, the second path 42 but not the first path 40 comprises a delay element 44. In other examples (not illustrated) the first path 40 but not the second path 42 comprises a delay element. In other examples (not illustrated) the first path 40 and the second path 42 comprise different delay elements.

In some examples, the delay element 44 corresponds to a phase change of +π/2 or - π/2 radians at a frequency of the received radio frequency signal 12. A phase change of -π/2 corresponds to a phase delay of π/2. A phase change of +π/2 corresponds to a phase delay of 3π/2.

The delay element 44 can delay the second linear polarization (CrossPol) component of a signal by a quarter of a wavelength. This corresponds to a phase change of -π/2 radians. This corresponds to a counterclockwise rotation of π/2 radians in an Argand diagram.

The delay element 44 can delay the second linear polarization (CrossPol) component of a signal by three-quarters of a wavelength. This corresponds to a phase change of +π/2 radians. This corresponds to a clockwise rotation of π/2 radians in an Argand diagram.

When the received signal 12 has the first linear polarization (CoPol) as illustrated in FIG 3, it has a first linear polarization (CoPol) component and no second linear polarization (CrossPol) component. The received signal can be represented as [1, 0] in an Argand diagram. The received signal is modulated, and the modulated signal is split and returns along both paths 40, 42 and is differentially delayed. The signal returned along the first path 40 has not been delayed and can be represented as [1/2, 0]. The differential delay, in this example, corresponds to a π/2 radians counterclockwise rotation of the portion of the signal in the second path 42. The signal returned along the second path 42, after the delay, can be represented as [0, - 1/2]. The transmitted signal can therefore be represented as [1/2, -1/2]. This is a circularly polarized signal with the second polarization (CrossPol) lagging the first linear polarization (CoPol). This is left-handed circular polarization.

If the delay element 44 instead advanced the second linear polarization (CrossPol) component of a signal by a quarter of a wavelength, corresponding to a phase change of +π/2 radians (a delay of 3π/2 radians), then the handedness would be reversed.

In this example, the activation signal 12 is received at only one polarization at the passive radio frequency device 30, while the passive modulated output signal is distributed evenly between the two polarizations at the antenna of the passive radio frequency device 30 to create a circular polarized output signal.

When the received signal 12 has the second linear polarization (CrossPol), it has no first linear polarization (CoPol) component and has only a second linear polarization (CrossPol) component. The received signal 12 can be represented as [0, 1] in an Argand diagram. The received signal is delayed. The delay, in this example, corresponds to a π/2 radians counterclockwise rotation of the received portion of the signal in the second path 42. The signal provided by the second path 42, after the delay, can be represented as [1, 0]. This signal is modulated, and the modulated signal is split and returns along both paths 40, 42 and is differentially delayed. The signal returned along the first path 40 can be represented as [1/2, 0]. The differential delay, in this example, corresponds to a π/2 radians counterclockwise rotation of the portion of the signal in the second path 42. The signal returned along the second path 42, after the delay, can be represented as [0, -1/2]. The transmitted signal can therefore be represented as [1/2, -1/2] in an Argand diagram. This signal is circularly polarized with the second polarization (CrossPol) lagging the first linear polarization (CoPol). This is left-handed circular polarization.

If the delay element 44 instead advanced the second linear polarization (CrossPol) component of a signal by a quarter of a wavelength, corresponding to a phase change of +π/2 radians (a delay of 3π/2 radians), then the handedness would be reversed.

When the received signal 12 has right-handed polarization, it has a first linear polarization (CoPol) component that lags a second linear polarization (CrossPol) component. The received signal 12 can be represented as [1, 1] in an Argand diagram. The received signal in the second path 42 is delayed. The delay, in this example, corresponds to a π/2 radians counterclockwise rotation of the received portion of the signal in the second path 42. The signal provided by the second path 42, after the delay, can be represented as [1, 0]. The signal provided by the combination of first and second paths 40, 42 can be represented as [2, 0]. This signal is modulated, and the modulated signal is split and returns along both paths 40, 42 and is differentially delayed. The signal returned along the first path 40 is [1, 0]. The differential delay, in this example, corresponds to a π/2 radians counterclockwise rotation of the reflected portion of the signal in the second path 42. The signal returned along the second path 42, after the delay, can be represented as [0, -1]. The transmitted signal can therefore be represented as [1, -1] in an Argand diagram. This signal is circularly polarized with the second polarization (CrossPol) lagging the first linear polarization (CoPol). This is left-handed circular polarization.

When the received signal 12 has left-handed polarization, it has a first linear polarization (CoPol) component that leads a second linear polarization (CrossPol) component. The received signal 12 can be represented as [1, -1] in an Argand diagram. The received signal in the second path 42 is delayed by 3π/2 radians. The delay, in this example, corresponds to a 3π/2 radians counterclockwise rotation (π/2 radians clockwise rotation) of the received portion of the signal in the second path 42. The signal provided by the second path 42, after the delay, can be represented as [1, 0]. The signal provided by the combination of first and second paths 40, 42 can be represented as [2, 0]. This signal is modulated, and the modulated signal is split and returns along both paths 40, 42 and is differentially delayed. The signal returned along the first path 40 is [1, 0]. The differential delay, in this example, corresponds to a 3π/2 radians counterclockwise rotation (π/2 radians clockwise rotation) of the reflected portion of the signal in the second path 42. The signal returned along the second path 42, after the delay, can be represented as [0, 1]. The transmitted signal can therefore be represented as [1, 1] in an Argand diagram. This signal is circularly polarized with the second polarization (CrossPol) leading the first linear polarization (CoPol). This is right-handed circular polarization.

In at least some examples, the activator 10 is implemented with two orthogonal dipole antennas. The transmission of a circularly polarized signal 12 can be performed by introducing a π/2 phase difference between the two orthogonal dipole antennas. For example, a π/2 phase delay provides left-handed polarization and a π/2 phase advance (+3 π/2 delay) provides right-handed polarization.

It will be appreciated from the foregoing that in some circumstances it may be desirable for the first polarization to change. For example, in FIG 3 the first polarization is linear, in FIG 4 and 5 it is right-hand circular polarized. It could, in other examples, be left-hand circular polarized.

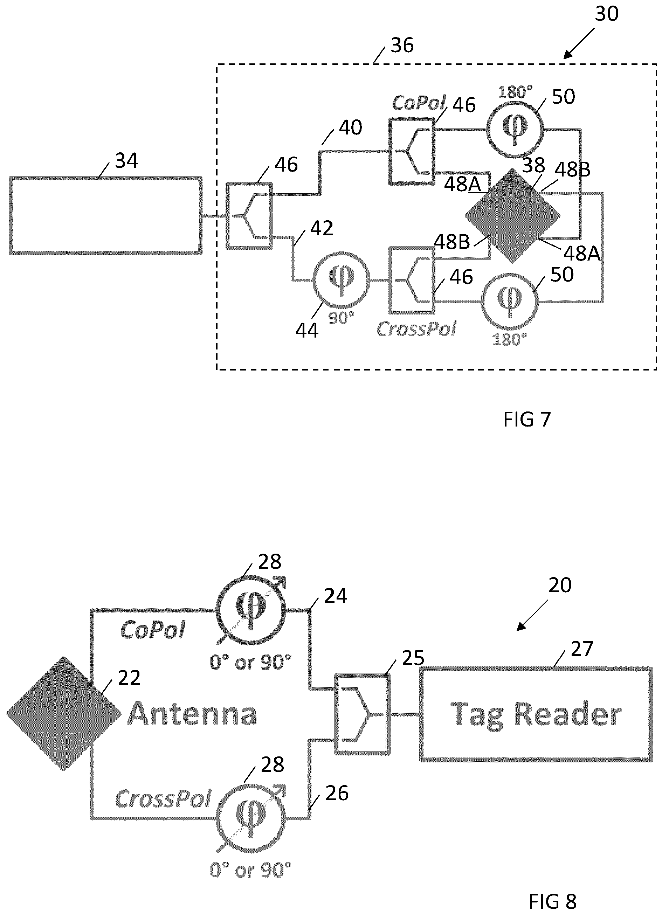

**FIG 7** illustrates an example of a passive radio frequency device 30 similar to that described with reference to FIGs 6A & 6B.

The antenna 38 is coupled to the modulation circuitry 34 via two distinct paths 40, 42 within the polarization conversion circuitry 36.

A first pair of opposing feeds 48A of the antenna 38 associated with a first linear polarization (CoPol) are coupled via a balun 50 to the first path 40.

In this example, one of the first pair of opposing feeds 48A of the antenna 38 associated with a first linear polarization (CoPol) is coupled via a balun 50 to a combiner/splitter 46 in the first path 40. The other one of the first pair of opposing feeds 48A of the antenna 38 associated with a first linear polarization (CoPol) is coupled directly to the combiner/splitter 46 in the first path 40. The balun 50 is a delay element which corresponds to a phase change of π radians at a frequency of the received radio frequency signal

A second pair of opposing feeds 48B of the antenna 38 associated with a second linear polarization (CrossPol), orthogonal to the first linear polarization (CoPol), are coupled via a balun 50 to the second path 42.

In this example, one of the second pair of opposing feeds 48B of the antenna 38 associated with the second linear polarization (CrossPol) is coupled via a balun 50 to a combiner/splitter 46 in the second path 42. The other one of the second pair of opposing feeds 48B of the antenna 38 associated with the second linear polarization (CrossPol) is coupled directly to the combiner/splitter 46 in the second path 42. The balun 50 is a delay element which corresponds to a phase change of π radians at a frequency of the received radio frequency signal.

The baluns 50 increase the isolation between the polarizations of the antenna 38 of the passive radio frequency device 30. The differential balun feed reduces cross-coupling between the excited orthogonal modes.

The other ends of the first path 40 and the second path 42 couple to the modulation circuitry 34 via a combiner/splitter 46. The first path 40 is associated with the first linear polarization (CoPol) and the second path 42 is associated with the second linear polarization (CrossPol) orthogonal to the first linear polarization (CoPol).

As previously described, the modulation circuitry 34 also comprises means 44 for introducing a differential delay between the first path 40 and the second path 42.

In this example, the second path 42 but not the first path 40 comprises a delay element 44. In other examples (not illustrated) the first path 40 but not the second path 42 comprises a delay element. In other examples (not illustrated) the first path 40 and the second path 42 comprise different delay elements.

FIG 8 illustrates an example of a reader 20 that is configured to switch between rejecting left-hand circular polarized signals and accepting right-hand circular polarized signals to rejecting right-hand circular polarized signals and accepting left-hand circular polarized signals.

The reader 20 comprises means for switching between rejecting/accepting left-hand circular polarized signals and right-hand circular polarized signals.

The reader 20 comprises a dual-polarized antenna 22. The signal from the CoPol feed of the antenna 22 travels along a first path 24 to combiner 25. The signal from the CrossPol feed of the antenna 22 travels along a second path 26 to combiner 25. The combiner 25 combines the signals from the paths 24, 26 and provides the combined signal to tag reader circuitry 27.

The first path 24 comprises a variable phase element 28, that introduces a variable phase delay to the signal in the first path 24.

The second path 26 comprises a variable phase element 28, that introduces a variable phase delay to the signal in the second path 26.

By selectively applying either a π/2 phase delay or a -π/2 phase advance (3π/2 phase delay) between the two paths 24, 26 the reader 20 switches between a state of rejecting left-hand circular polarized signals and accepting right-hand circular polarized signals and a state of accepting left-hand circular polarized signals and rejecting right-hand circular polarized signals.

For example, a π/2 phase delay of CrossPol polarization relative to CoPol polarization (delay of the second path 26 relative to the first path 24) can be achieved by applying a delay of π/2 at the variable phase element 28 in the second path 26 and applying zero delay at the variable phase element 28 in the first path 24.

For example, a π/2 phase delay of CoPol polarization relative to CrossPol polarization (delay of the first path 24 relative to the second path 26) can be achieved by apply a delay of π/2 at the variable phase element 28 in the first path 24 and applying zero delay at the variable phase element 28 in the second path 26.

FIG 9 illustrates an example of a radio network 200 comprising a plurality of network nodes 202 including terminal nodes 210, access nodes 220 and one or more core nodes (not illustrated). The terminal nodes 210 and access nodes 220 communicate with each other. The one or more core nodes communicate with the access nodes 220.

The radio network 200 is in this example a cellular telecommunications network, in which at least some of the terminal nodes 210 and access nodes 220 communicate with each other using transmission/reception of radio waves. The one or more core nodes may, in some examples, communicate with each other. The one or more access nodes 220 may, in some examples, communicate with each other.

The cellular telecommunications network comprises a plurality of cells each served by at least one access node 220. In this example, the interface between the terminal nodes 210 and an access node 220 defining a cell is a wireless interface.

The access node 220 is a cellular radio transceiver. The terminal nodes 210 are cellular radio transceivers.

In the example illustrated the cellular network 200 is a third generation Partnership Project (3GPP) network in which the terminal nodes 210 are user equipment (UE) and the access nodes 220 are transmission-reception-points (TRP). A base station can be a TRP or can use multiple TRPs.

The network 200 is a Next Generation (or New Radio, NR) Radio Access network (NG-RAN). The NG-RAN consists of gNodeBs (gNBs) 220 (with one or more TRPs), providing the user plane and control plane (RRC) protocol terminations towards the UE 210. The gNBs 220 are interconnected with each other by means of an X2/Xn interface. The gNBs are also connected by means of the N2 interface to the Access and Mobility management Function (AMF).

A user equipment comprises a mobile equipment. Where reference is made to user equipment that reference includes and encompasses, wherever possible, a reference to mobile equipment.

A system 100, can for example, be implemented in a network 200.

A network node 202 can comprise an activator 10 configured to transmit a radio frequency signal 12 having the first polarization P1.

A second different network node 202 can comprises a reader 20 configured to receive a radio frequency signal 32 having a second polarization P2 more efficiently than a radio frequency signal 12 having the first polarization P1.

A third network node 202, different to the first and second network nodes 202, can comprise at least a passive radio frequency device 30 configured to backscatter a received radio frequency signal 12 having a first polarization P1, transmitted by the activator 10, as a modulated radio frequency signal 32 having a second polarization P2 different to the first polarization P1.

There can be multiple passive radio frequency devices 30 distributed across a plurality of network nodes 202.

The activator 10 is comprised in a first node 202 of the cellular telecommunications network 200 and the reader 20 is comprised in a second node 202 of the cellular telecommunications network 200 that is distinct from the first node 202 of the cellular telecommunications network 200.

The activator 10 can, for example, be any 3GPP compliant device (gNB, UE,
Fixed wireless access (FWA), Network Controlled Repeater (NCR), etc.). The reader 20 can, for example, be any 3GPP compliant device (gNB, UE, Fixed wireless access (FWA), Network Controlled Repeater (NCR), etc.).

In some but not necessarily all examples, the first node 202 is a user equipment (UE) and/or the second node 202 is a user equipment and/or the third node 202 is a user equipment.

In at least some examples, the network 200 can discover the passive radio frequency device 30 only if the passive radio frequency device 30 hears an activation signal 12 loud enough so that: it can charge sufficiently and it can generate an "I am here" response which is loud enough to be heard by another nearby network element (a gNB, PRU, RSU, UE, etc.) operating as reader 20.

The activation signal 12 is a high-power, far-field signal that propagates as a radio wave. The activation signal can have a range greater than 200m. The activation signal 12 uses a frequency within a licensed spectrum. For example, in some examples the activation signal 12 uses a frequency within the range 410 - 7 125 MHz or within the range 24 250 - 52 600 MHz or other New Radio licensed bands.

The power level of the activator 10 can be controlled by the access node 220 (e.g. gNB) allocating the resources needed for the activation signals 12.

The examples described above reduce interference at the reader 20 from direct transmission of the activation signal 12 from the activator 10. This enables low cost and low power readers 20 for reading the passive radio frequency device 30. The dynamic range requirement for the reader 20 is reduced.

The reader 20 is typically static and manual aligned with a static activator 10 to ensure low interference. The passive radio frequency device 30 may be static or dynamically moving.

Where a structural feature has been described, it may be replaced by means for performing one or more of the functions of the structural feature whether that function or those functions are explicitly or implicitly described.

As used here 'module' refers to a unit or apparatus that excludes certain parts/components that would be added by an end manufacturer or a user. The passive radio frequency device 30 can be comprised in a module. The activator 10 can be comprised in a module. The reader 20 can be comprised in a module.

The above-described examples find application as enabling components of: automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. A passive radio frequency device configured to backscatter a received radio frequency signal having a first polarization as a modulated radio frequency signal having a second polarization different to the first polarization.

2. A passive radio frequency device as claimed in claim 1, comprising polarization conversion circuitry configured to convert a signal between linear polarization and circular polarization.

3. A passive radio frequency device as claimed in claim 2, wherein the polarization conversion circuitry is configured to convert a signal from linear polarization to circular polarization and/or wherein the polarization conversion circuitry is configured to convert a signal from circular polarization to linear polarization.

4. A passive radio frequency device as claimed in any preceding claim, comprising polarization conversion circuitry configured to convert a signal between left-handed circular polarization and right-handed circular polarization.

5. A passive radio frequency device as claimed in any preceding claim, comprising polarization conversion circuitry comprising:
a first path associated with a first linear polarization;
a second path associated with a second linear polarization orthogonal to the first linear polarization;
means for introducing a differential delay between the first path and the second path.

6. A passive radio frequency device as claimed in claim 5, wherein the second path but not the first path comprises a delay element.

7. A passive radio frequency device as claimed in claim 6, wherein the delay element corresponds to π/2 radians at a frequency of the received radio frequency signal.

8. A passive radio frequency device as claimed in any of claims 5 to 7, wherein the first path comprises a balun and the second path comprises a balun.

9. A passive radio frequency device as claimed in any preceding claim, comprising a dual polarized antenna or receiving the radio frequency signal having the first polarization and transmitting the radio frequency signal having the second polarization.

10. A passive radio frequency device as claimed in any preceding claim, configured as a battery-less tag.

11. A system comprising:
at least the passive radio frequency device as claimed in any of claims 1 to 10,
an activator configured to transmit the radio frequency signal having the first polarization;
a reader configured to receive the radio frequency signal having the second polarization more efficiently than the radio frequency signal having the first polarization.

12. A system as claimed in claim 11, wherein the activator is comprised in a first node of a cellular telecommunications network, wherein the reader is comprised in a second node of the cellular telecommunications network that is distinct from the first node of the cellular telecommunications network.

13. A system as claimed in claim 12, wherein the first node is a user equipment and/or the second node is a user equipment.

14. A system as claimed in claim 11, 12 or 13, wherein the activator and the reader are configured for line-of-sight operation,
wherein the reader is configured to reject radio frequency signals having the first polarization and accept radio frequency signals having the second polarization, wherein the reader is configured to reject radio frequency signals from the activator and accept radio frequency signals from the passive radio frequency device.

15. A system as claimed in claim 11, 12, 13 or 14, wherein the activator comprises a dual-polarized patch antenna and/or wherein the reader comprises means for switching between rejecting/accepting left-hand circular polarized signals and right-hand circular polarized signals.
